(19) Europäisches Patentamt
European Patent Office
Office européen des brevets

(11) EP 1 975 689 A1

(12) EUROPEAN PATENT APPLICATION
published in accordance with Art. 158(3) EPC

(43) Date of publication:
01.10.2008 Bulletin 2008/40

(51) Int Cl.:
G02F 1/1347 (2006.01)     G02F 1/1334 (2006.01)
G02F 1/1335 (2006.01)

(21) Application number: 07706474.9

(22) Date of filing: 10.01.2007

(86) International application number:
PCT/JP2007/050127

(87) International publication number:
WO 2007/083540 (26.07.2007 Gazette 2007/30)

(84) Designated Contracting States:
DE FR GB IT

(30) Priority: 20.01.2006 JP 2006012602

(71) Applicant: NEC Corporation
Minato-ku
Tokyo 108-8001 (JP)

(72) Inventor: SUZUKI, Daisuke
Tokyo 108-8001 (JP)

(74) Representative: Glawe, Delfs, Moll
Patentanwälte
Postfach 26 01 62
80058 München (DE)

(54) **MOBILE TERMINAL**

(57)     Visibility of a transmissive liquid crystal display panel is improved in outside and inside environments.

A liquid crystal display 110 to be installed in a portable terminal includes a transmissive liquid crystal display panel 106, a high directivity backlight 103 disposed opposing to the liquid crystal display panel 106, and a transmission diffusion changeover film 104 for conducting a changeover between transmission diffusion states of light emitted from the high directivity backlight 103.

The transmission diffusion changeover film 104 is disposed between the liquid crystal display panel 106 and the high directivity backlight 103 and is constructed to be capable of conducting a changeover between a first state wherein straight light transmittivity of emission light from the high directivity backlight 103 is relatively high and a second state wherein the straight light transmittivity of emission light from the high directivity backlight 103 is relatively low.

F I G . 1

**Description**

TECHNICAL FIELD

The present invention relates to a portable terminal including a transmissive liquid crystal display.

RELATED ART

Portable terminals are likely to be employed inside and indoor. Therefore, in either situation, it is required to sufficiently secure visibility of the liquid crystal display.

Also, as resolution of liquid crystal becomes finer and color reproduction property becomes denser, there exists a tendency that transmittivity of a liquid crystal panel is much more reduced in future. Hence, it can be considered that luminance of incident light to the liquid crystal panel is required to be increased. On the other hand, increasing light sources and/or increasing power for higher luminance of a backlight become/becomes difficult due to problems of consumption power and mounting technique.

Conventionally, if it is desired to secure visibility in an environment with strong daylight such as an outdoor environment, there is employed a semi-transmissive reflective liquid crystal display.

There has been a technique, as described in Patent Document 1, to increase luminance of the semi-transmissive reflective liquid crystal display in use as a transmission type and in use as a reflection type. This document describes disposing an optical shutter between a backlight and a liquid crystal display cell of a semi-transmissive reflective liquid crystal display. When the liquid-crystal panel is used in a reflection state, the optical shutter is set to a state of high reflectivity to be employed as a reflection plate. Furthermore, when the liquid-crystal panel is used in a transmission state, the optical shutter is set to a state of high transmittivity.

According to Patent Document 1, by changing the state of the optical shutter in association with on and off of the backlight, there can be displayed a clearer image with high screen luminance in the reflection type use as well as the transmission type use when compared with a case in which a semi-transmission plate is employed.

On the other hand, there exists a transmissive liquid crystal display as described in Patent Document 2. According to the document, lens sheets are arranged between a backlight and a liquid crystal display cell of a semi-transmissive liquid crystal display panel. There are disposed two kinds of lens sheets having mutually different focusing properties, and these sheets can be replaced with each other by mechanical changeover means such as a motor. This resultantly makes it possible to simply use a property of a wide viewing angle and a property of a narrow viewing angle in the screen display according to a purpose.

   Patent Document 1: Japanese Patent Laid-Open Pub. No. H8-76104
   Patent Document 2: Japanese Patent Laid-Open Pub. No. H11-84357

DISCLOSURE OF THE INVENTION

PROBLEMS TO BE SOLVED BY THE INVENTION

However, the conventional techniques described above leave still room for improvement in the following points.

First, in an environment such as an outdoor environment with strong daylight, even if the technique described in Patent Document 1 is adopted, the sufficient visibility cannot be attained.

More specifically, in a semi-transmissive reflective liquid crystal display such as that described in Patent Document 1, reduction in contrast and shift in hue due to reflection of black as well as a pattern of a rainbow due to interference of a reflection plate take place in some cases when the outdoor daylight is strong. Also, in the semi-transmissive reflective liquid crystal display, when a transmission portion and a reflection portion are disposed in one pixel, transmittivity of light emitted from the backlight becomes lower as compared with the configuration of the transmission type.

Additionally, in the case of the semi-transmissive reflective type, there are required a process to set a reflection layer in the liquid-crystal display and a process to arrange a layer to compensate for light phases in the transmission part and the reflection part. This leads to a fear that a configuration of the display would be more complex.

Furthermore, since the liquid-crystal display described in Patent Document 2 includes a plurality of lens sheets and mechanical changeover means, there exists a fear that the configuration of the display becomes greater and heavier. Hence, to apply the liquid crystal display to a portable apparatus, there exists room for improvement in simplification of the configuration.

MEANS FOR SOLVING THE PROBLEM

In accordance with the present invention, there is provided a portable terminal, including:

a transmissive liquid crystal display panel;
an area light source disposed opposing to the liquid crystal display panel; and
a transmission diffusion changeover film for conducting a changeover between transmission and diffusion states of light emitted from the area light source, wherein
the transmission diffusion changeover film is arranged between the liquid crystal display panel and the area light source and is configured to be capable of conducting a changeover between a first state wherein straight light transmittivity of emission light from the area light source is relatively high and a second state wherein the straight light transmittivity of emission light from the area light source is relatively low.

The portable terminal of the present invention includes a transmission diffusion changeover film. The film is constructed to be capable of conducting a changeover between two states in which transmittivity of light emitted from an area light source takes relatively different values. By arranging such film between the transmissive liquid crystal display panel and the area light source, it is possible to feed the light emitted from the area light source to the liquid crystal display panel by changing the transmittivity thereof depending on a utilizing environment of the portable terminal. By conducting a changeover between the first state and the second state, front luminance or a viewing angle of the incident light to the liquid crystal display panel can be changed.

Furthermore, in accordance with the present invention, the first and second states are implemented by changing the state of the transmission diffusion changeover film; therefore, to increase luminance of the incident light to the liquid crystal display panel, it is not required to increase the number of light sources and power in the area light source functioning as the backlight. Hence, in accordance with the present invention, it is possible that the front luminance or the viewing angle of the incident light to the liquid crystal display panel can be raised according to the utilizing environment to thereby improve visibility of the liquid crystal display panel.

Additionally, according to the present invention, the liquid crystal display panel is used in the transmission type in either one of the first and second states. Hence, visibility can be improved as compared with the case of the portable terminal on which the semi-transmissive reflective liquid crystal display is mounted.

It is possible to use the portable terminal of the present invention in the first state with relatively high transmittivity in an environment such as an outside environment where daylight is strong and in also the second state with relatively high transmittivity in an environment such as an inside environment where daylight is weak. According to the portable terminal of the present invention, sufficient visibility can be secured in both cases of indoor and outdoor uses.

In the present specification, the portable terminal may include various electronic devices easily to be carried by individuals such as a cellular terminal, a portable computer, a digital camera, a watch, a portable DVD player, a portable game machine, and a Personal Digital Assistance (PDA). It is possible that the portable terminal includes or does not include a radio communication function.

In the portable terminal of the present invention, there may be employed, as the area light source, a light source in which the emission light from the area light source includes a viewing angle equal to or less than 40° in the full width ($\pm$20°). In this way, it is possible to further increase directivity of the emission light from the transmission diffusion changeover film in the first state. Hence, for example, it is possible to further increase the front luminance or the viewing angle of the incident light to the liquid-crystal display panel in the first state.

Moreover, in this specification, "the viewing angle is x degrees" indicates that the full width at half maximum of optical power is x degrees in setting as a reference optical axis a light emission angle in which the emission intensity takes the maximum value. Also, in the specification, it is assumed that the viewing angle is represented in the full width unless otherwise specified.

In the portable terminal of the present invention, the difference between the viewing angle of the emission light from the transmission diffusion changeover film in the second state and that of the emission light from the transmission diffusion changeover film in the first state may be ten degrees or more in the full width.

Also, in the portable terminal of the present invention, the front luminance of the emission light from the transmission diffusion changeover film in the first state may be equal to or more than twice that of the emission light from the transmission diffusion changeover film in the second state.

As a result, there can be obtained a configuration in which the changeover between the transmission and diffusion states is conducted more remarkably between the first and second states.

In the portable terminal of the present invention, it is also possible that the transmission diffusion changeover film includes a material capable of conducting a changeover between the transmission and diffusion states of light and the changeover between the first and second states is carried out on the basis of presence or absence of applying a voltage to the transmission diffusion changeover film. In the configuration, it is also possible that a voltage is applied to the transmission diffusion changeover film in the first state and no voltage is applied to the transmission diffusion changeover film in the second state. As a result, while suppressing an increase in the consumption power of the area light source, the changeover between the transmission and diffusion states of light in the transmission diffusion changeover film can be more securely carried out in a simple configuration.

In the portable terminal of the present invention, it is also possible that the viewing angle of the emission light from the transmission diffusion changeover film is substantially equal to that of the emission light from the area light source in the first state and the transmission diffusion changeover film more reduces the directivity of emission light from the area light source in the second state than in the first state.

In this configuration, the transmission diffusion changeover film substantially transmits the incident light from the area light source in the first state; and the transmission diffusion changeover film expands the viewing angle of the emission light from the optical material to reduce directivity in the second state. Hence, while the directivity of the emission light from the transmission diffusion changeover film is kept equivalent to that of the emission light from the area light source in the first state, the directivity can be lowered to a predetermined state in the second state. Therefore, visibility of the liquid-crystal display panel can be further sufficiently secured in the first and second states.

In the portable terminal of the present invention, the area light source may include a light source, a light conducting plate for conducting the emission light from the light source and producing an area light source, and directivity enhancing means disposed between the light conducting plate and the transmission diffusion changeover film for increasing the directivity of the emission light from the light conducting plate. As a result, since the directivity of the emission light from the area light source can be further increased, the directivity of the emission light from the transmission diffusion changeover film can be further increased.

As the directivity enhancing means, there may be considered, for example, a louver film. By using the louver film, it is possible to securely increase the directivity of the emission light from the area light source without considerably increasing the weight of the portable terminal.

In addition, the louver film may include a first louver film including a plurality of films arranged in a first direction to be parallel to each other and a second louver film including a plurality of films which extend in a direction perpendicular to the first louver and which are arranged to be parallel to each other. In this configuration, it is possible to further increase the directivity of the emission light from the area light source.

In the portable terminal of the present invention, there may be further include an optical sensor for detecting luminance or illuminance of daylight. Furthermore, the portable terminal of the present invention, there may be included a controller for controlling the transmission and diffusion states of the transmission diffusion changeover film such that the controller conducts a changeover between the first and second states according to the luminance or illuminance of daylight in the vicinity of the liquid-crystal display panel detected by the optical sensor. In this structure, the directivity of the incident light to the liquid crystal display panel can be more securely controlled according to the intensity of daylight in the vicinity of the display panel.

In a portable terminal including a controller, it is possible that the controller sets the transmission diffusion changeover film to the first state if the luminance or illuminance of daylight is equal to or more than a threshold value and the controller sets the transmission diffusion changeover film to the second state if the luminance or illuminance of daylight is less than the threshold value. As a result, according to the luminance or illuminance of daylight, a changeover can be more securely carried out between the first and second states. Furthermore, in an environment with strong daylight, the transmission diffusion changeover film can be more securely set to the first state with high directivity.

In this regard, arbitrary combinations of the respective configurations as well as methods and displays in which the representations of the present invention are exchanged therebetween are also effective as exemplary embodiments of the present invention.

## ADVANTAGES OF THE INVENTION

As described above, in accordance with the present invention, there is implemented a technique which improves, by disposing a transmission diffusion changeover film between an area light source and a liquid crystal display panel, visibility in an outside environment of the liquid crystal display panel of a portable terminal.

## BEST MODE FOR CARRYING OUT THE INVENTION

Next, description will be given of an exemplary embodiment of the present invention by referring to drawings. In all drawings, common constituent components are assigned with the same reference numerals, and description thereof will be omitted according to necessity.

First, description will be given of first and second exemplary embodiments for a configuration of a liquid crystal display applied to a portable terminal of the present invention. Thereafter, description will be given of a third exemplary embodiment for a portable terminal with such liquid crystal display mounted thereon.

(First exemplary embodiment)

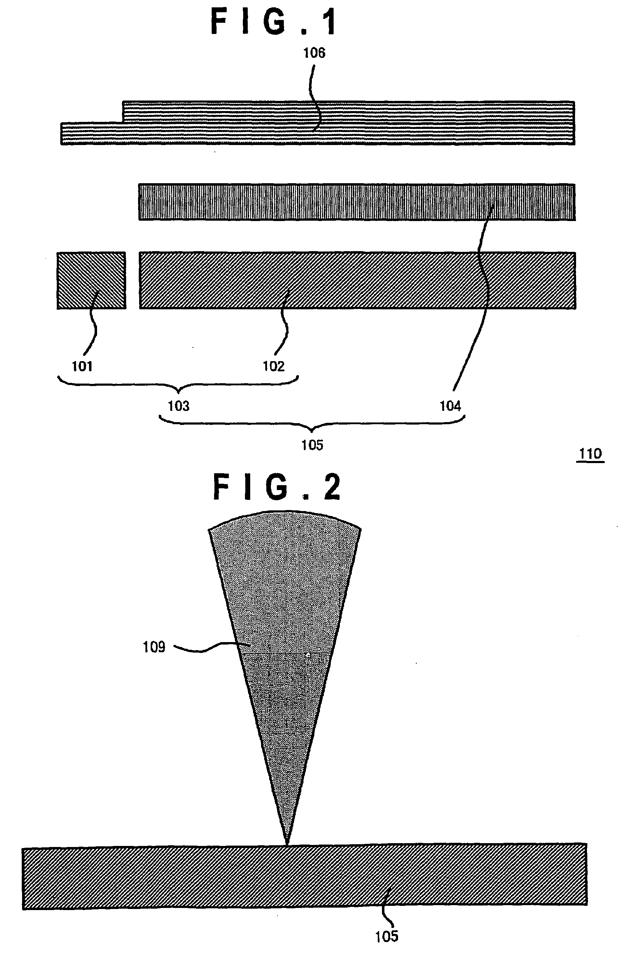

FIG. 1 is a cross-sectional diagram showing a structure of a liquid crystal display of the exemplary embodiment. The liquid crystal display 110 shown in FIG. 1 is mounted on a portable terminal and includes a function to improve visibility under the sunlight.

The liquid crystal display 110 includes a transmissive liquid crystal display panel (liquid-crystal display panel 106) and a backlight module 105 opposing to the liquid crystal display panel 106.

The backlight module 105 includes an area light source (high directivity backlight 103) arranged opposing to the liquid crystal display panel 106 and a transmission diffusion changeover film 104 which conducts a changeover between the transmission diffusion states of emission light from the high directivity backlight 103.

The high directivity backlight 103 includes a light source 101 and an optical material 102 to convert light fed from the light source 101 into an area light source.

As the light source 101, a point light source such as a Light-Emitting Diode (LED) is representatively utilized. Additionally, the optical material 102 converts the emission light from the light source 101 into the area light source. A light conductive plate, a reflection sheet, or a prism sheet may be used as such material.

As the high directivity backlight 103, there is employed a backlight designed to collect light from a luminous surface onto a front side. In such high directivity backlight 103, the emission light from the luminous surface of the optical material 102 includes strong directivity in a normal line of the luminous surface.
The viewing angle of the emission light from the high directivity backlight 103, more specifically, from the optical material 102 is, for example, 40° or less in the full width, namely, equal to or within $\pm 20$ °.
Also, it is possible to adopt a backlight in which the 40° directivity y of the emission light from the optical material 102 satisfies y $\geq$ 50. In this connection, the 40° directivity y is represented by the following expression.

$$y = (\text{emission light intensity within } 40^{\circ} \text{ in the full width for the}$$
$$\text{emission angle } (0^{\circ}) \text{ in which emission light intensity takes the}$$
$$\text{maximum value})/(\text{total emission light intensity})$$
$$\qquad\qquad\qquad \dots (1)$$

The transmission diffusion changeover film 104 is disposed between the liquid crystal display panel 106 and the high directivity backlight 103 to oppose to the luminous surface of the high directivity backlight 103. The liquid crystal display panel 106 is arranged on a surface of the transmission diffusion changeover film 104 disposed on an uppermost surface of the backlight module 105.

The transmission diffusion changeover film 104 is constructed to conduct a changeover between a first state in which the straight light transmittivity of the emission light from the high directivity backlight 103 is relatively high and a second state in which the straight light transmittivity of the emission light from the high directivity backlight 103 is relatively low. By conducting a changeover between the first and second states, it is possible to change, for example, front luminance of the emission light from the transmission diffusion changeover film 104. Moreover, by conducting a changeover between the first and second states, it is possible to change, for example, directivity of the emission light from the transmission diffusion changeover film 104. By conducting a changeover of the directivity, the front luminance of the emission light can be switched.

The transmission diffusion changeover film 104 includes a material capable of conducting a changeover between the transmission diffusion states of light; according to presence or absence of applying of a voltage to the transmission diffusion changeover film 104, a changeover is carried out between the first and the second states. That is, the transmission diffusion changeover film 104 includes a material which can electrically accomplish a changeover between the transmission state and the scattering diffusion state.

As the transmission diffusion changeover film 104, there is adopted a sheet in which a Polymer Network Liquid Crystal (PNLC) material is interposed between electrodes. Although the kind of the PNLC material is not limited, it is favorable to employ a material having high straight light transmittivity in the first state.

In the first state, a voltage is applied to the transmission diffusion changeover film 104. On the other hand, in the second state, no voltage is applied to the transmission diffusion changeover film 104. In the transmission diffusion changeover film 104, in a state wherein no voltage is applied across the electrodes sandwiching the PNLC material, the material is opaque and is hence in the second state in which the transmittivity is relatively low and the diffusivity is relatively high. On the other hand, if a voltage is applied across the electrodes sandwiching the PNLC material, the material is transparent and is hence in the first state in which the transmittivity is relatively high and the diffusivity is relatively low.

Additionally, in the first state, the viewing angle of the emission light from the transmission diffusion changeover film 104 is substantially equal to that of the emission light from the optical material 102 of the high directivity backlight 103; the transmission diffusion changeover film 104 more reduces the directivity of the emission light from the optical material 102 in the second state than in the first state.

In this situation, the viewing angle of the emission light from the transmission diffusion changeover film 104 may be 40° or less in the full width. In addition, the 40° directivity y represented by expression (1) may satisfy $y \geq 50°$ in the configuration.

The transmission diffusion changeover film 104 is configured, for example, such that the difference between the viewing angle of the emission light from the transmission diffusion changeover film 104 in the second state and that of the emission light from the transmission diffusion changeover film 104 in the first state is equal to or more than 10° in the full width. Additionally, the film may be configured such that the viewing angle of the emission light from the transmission diffusion changeover film 104 in the first state is 40° or less in the full width and that from the transmission diffusion changeover film 104 in the second state is more than 40° in the full width.

Furthermore, it is also possible that the front luminance of the emission light from the transmission diffusion changeover film 104 in the first state is equal to or more than twice that of the emission light from the transmission diffusion changeover film 104 in the second state.

The backlight module 105 includes the transmission diffusion changeover film 104 described above. As a result, by conducting a changeover between presence and absence of a voltage applied to the transmission diffusion changeover film 104, it is possible to conduct a changeover between the transmission and diffusion states of the emission light from the transmission diffusion changeover film 104, namely, the incident light to the liquid-crystal display panel 106. Hence, by conducting a changeover between presence and absence of a voltage applied to the transmission diffusion changeover film 104, the front luminance of the emission light from the transmission diffusion changeover film 104 can be switched. Also, by conducting a changeover between presence and absence of a voltage applied to the transmission diffusion changeover film 104, it is also possible to change the directivity in the front direction of the emission light from the transmission diffusion changeover film 104.

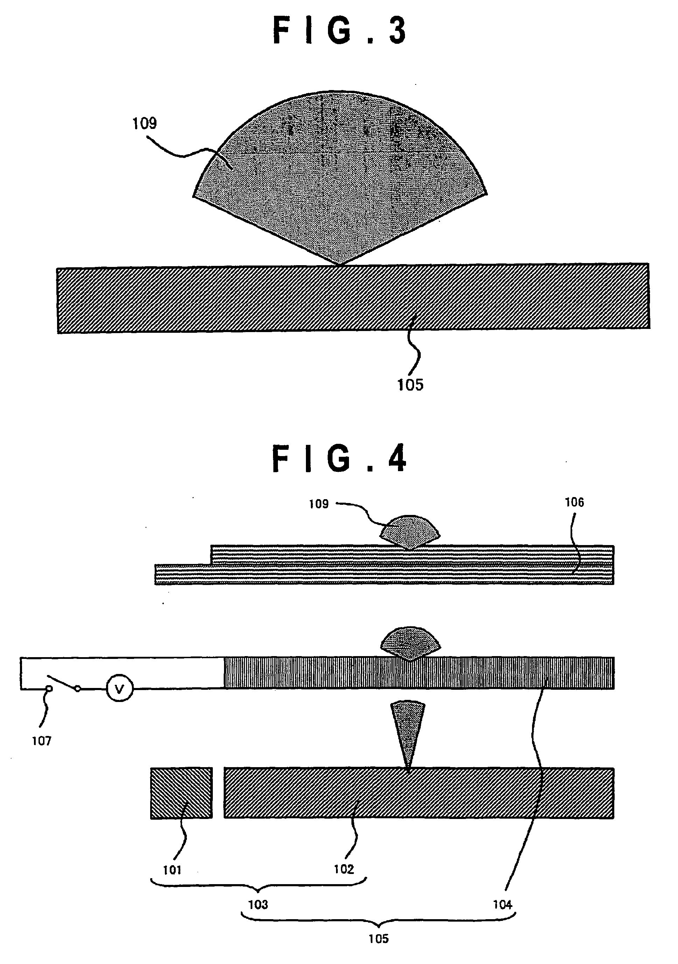

Subsequently, by referring to FIGS. 2 and 3, description will be given further in detail of the changeover of the emission light from the transmission diffusion changeover film 104. In this connection, FIGS. 2 and 3 respectively correspond to the first and second states.

Moreover, in FIGS. 2 and 3 and FIGS. 4 to 6, which will be described later, a sector drawn on each luminous surface indicates optical energy of the emission light. The area of the sector is the total energy from the light source and is substantially in proportion to the optical energy of the light source 101. In addition, a vector drawn from the center of the sector to the arc thereof corresponds to intensity, i.e., brightness of the light emitted in the direction. In these diagrams, the distribution of the light is represented by a sector for simple explanation; however, actually, there possibly appear various distributions depending on the design of the backlight.

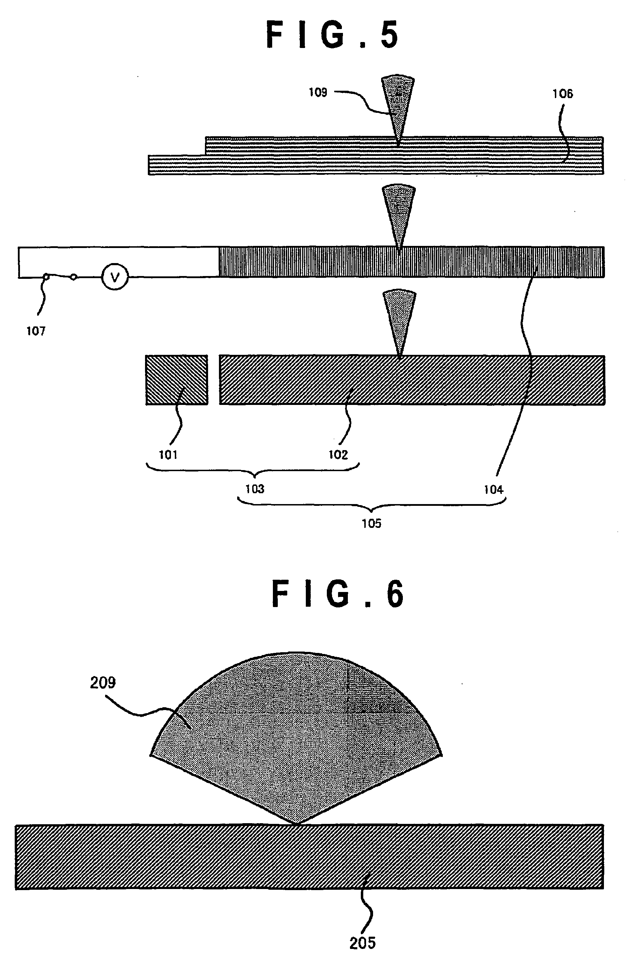

FIG. 2 shows optical energy 109 of emission light from the backlight module 105 in a state wherein a voltage is applied to the transmission diffusion changeover film 104. FIG. 2 corresponds to a case wherein a changeover switch (FIG. 5) establishing connection between electrodes (not shown) arranged on both surfaces of the transmission diffusion changeover film 104 is in an on state. In this situation, the transmission diffusion changeover film 104 becomes transparent.

In FIG. 2, the transmission diffusion changeover film 104 transmits emission light with high directivity from the high directivity backlight 103, without substantially changing the directivity thereof, namely, by keeping almost the same high directivity unchanged. For example, the transmission diffusion changeover film 104 passes therethrough the transmitted light as light having a viewing angle substantially equivalent to that of the transmitted light from the high directivity backlight 103. Hence, the backlight module 105 emits light with high directivity in the front direction; and optical energy 109 has a narrow angular distribution. The angular distribution of the emission light from the transmission diffusion changeover film 104 is substantially equivalent to that of the emission light from the optical material 102.

On the other hand, FIG. 3 is a diagram showing optical energy of the emission light from the backlight module 105 in a state wherein no voltage is applied to the transmission diffusion changeover film 104. FIG. 3 corresponds to a case wherein the changeover switch (FIG. 5) establishing connection between the electrodes (not shown) arranged on both surfaces of the transmission diffusion changeover film 104 is in an off state. In this situation, the transmission diffusion changeover film 104 is opaque, and incident light to the transmission diffusion changeover film 104 is converted into light having wide directivity in the front direction. Therefore, the angular distribution and the viewing angle of the optical energy 109 of the emission light from the backlight module 105 are respectively wider than those of the emission light from the high directivity backlight 103.

Next, referring to FIGS. 4 and 5, description will be given of operation of the liquid crystal display 110. FIGS. 4 and 5 correspond to the second and first states, respectively. In FIGS. 4 and 5, the liquid crystal display 110 further includes a voltage applying unit (not shows) to apply a voltage to the transmission diffusion changeover film 104 and a changeover switch 107 to carry out a changeover between applying and non-applying of a voltage to the transmission diffusion changeover film 104. Also, in either one of FIGS. 4 and 5, the optical material 102 emits light with high directivity in the front direction.

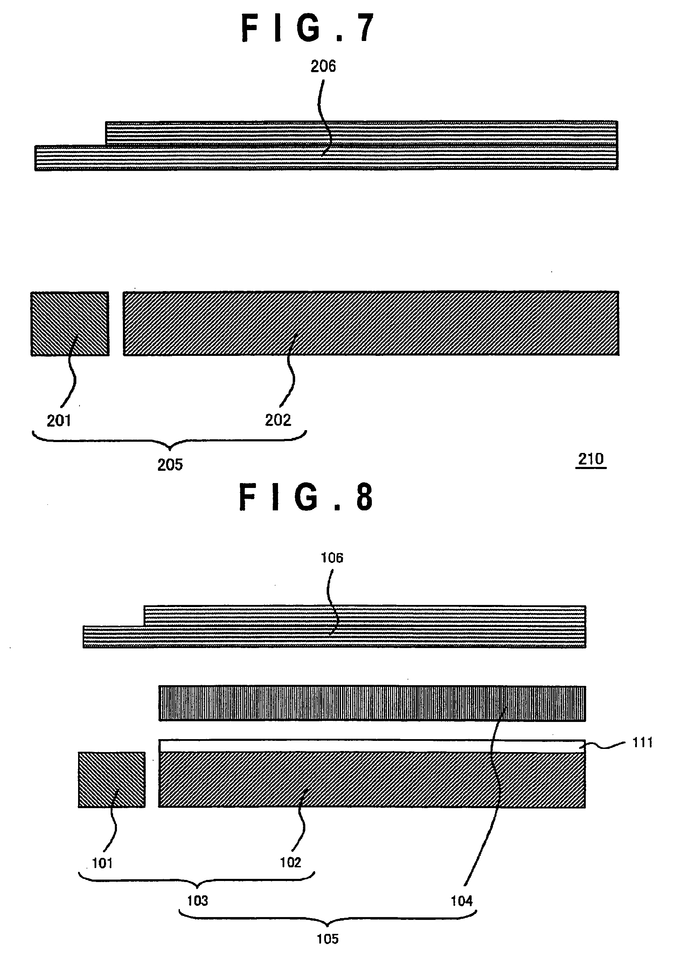

In FIG. 4, the changeover switch 107 is in an off state and no voltage is applied to the transmission diffusion changeover film 104 of the backlight module 105. In this situation, the transmission diffusion changeover film 104 is in a state in which transmittivity is relatively low and diffusivity is high. Hence, the emission light with high directivity from the high directivity backlight 103 is diffused to be converted into emission light with wide directivity shown in FIG. 3. Since this emission light with wide directivity is similar to the emission light from the conventional backlight module (FIG. 7), the emission light through the liquid crystal display panel 106 is equivalent to that of the related art.

As above, in the second state, the transmission diffusion changeover film 104 is in a state to scatter the incident light, and light with high directivity emitted from the high directivity backlight 103 is diffused and the directivity is lowered to efficiently secure visibility in an inside environment. In this state, the light is converted to have directivity substantially equivalent to that of, for example, the conventional backlight. In this case, luminance in the normal direction of the luminous surface, namely, luminance in the front is also equivalent to that of the conventional backlight.

On the other hand, in FIG. 5, the changeover switch 107 is in an on state to operate the transmission diffusion changeover film 104. If a voltage is applied to the transmission diffusion changeover film 104, the transmission diffusion changeover film 104 becomes transparent. Hence, light emitted with high directivity from the high directivity backlight 103 directly passes through the transmission diffusion changeover film 104 as described by referring to FIG. 2. Since light with high directivity is emitted from the backlight module 105, the directivity of the emission light from the liquid-crystal display panel 106 also becomes higher.

Thus, in the state of high transmittivity of the transmission diffusion changeover film 104, light emitted with high directivity from the high directivity backlight 103 passes through the liquid crystal display panel 106 with substantially equivalent high directivity kept retained. Therefore, optical energy diffused in various directions in the conventional backlight is concentrated onto the front direction; with consumption power equivalent to that of the conventional backlight, it is possible to remarkably increase the front luminance as compared with the related art.

In this situation, the light source 101 has the same optical power in the cases of FIGS. 4 and 5. Hence, the total of the optical energy 109 of the emission light through the liquid crystal display panel 106 is substantially equal. Moreover, when a voltage is applied to the transmission diffusion changeover film 104 (FIG. 5), energy of the emission light concentrates onto a position near the direction of high directivity of the emission light, namely, near the front direction of the display screen of the liquid crystal display panel 106. Resultantly, the luminance of the display screen can be remarkably improved without increasing the consumption power even in the state of FIG. 5.

Next, description will be given of operation and advantages of the exemplary embodiment.
In the exemplary embodiment, the liquid crystal display panel 106 is arranged on a surface of the backlight module 105 constructed by combining the high directivity backlight 103 with the transmission diffusion changeover film 104. Furthermore, by conducting a changeover between the transmission and diffusion states of the transmission diffusion changeover film 104, it is possible to change the front luminance of the incident light to the liquid crystal display panel 106. Through the operation, it is possible, without increasing the consumption power of the backlight, to remarkably change the front luminance of the emission light from the transmission diffusion changeover film 104 to considerably increase the front luminance. Hence, when the exemplary embodiment is installed in a portable terminal to be used inside and outside, sufficient visibility is secured in both of the weak daylight environment such as an inside environment and the strong daylight environment such as an outside environment.

Furthermore, in accordance with the exemplary embodiment, it is possible to install, in a portable terminal, means to secure visibility in a bright place. For example, to ordinarily secure visibility of a transmissive liquid crystal display in quite a bright place such as under the sunlight, it is required to remarkably increase luminance of the screen. In the liquid-crystal display 110, since the front luminance can be increased by applying a voltage to the transmission diffusion changeover film 104 according to necessity, sufficient visibility is attained also under the sunlight and the like.

Now, description will be further given of the liquid-crystal display 110 of the exemplary embodiment conmpared with a conventional display. FIG. 7 is a cross-sectional view showing a structure of a conventional liquid crystal display. Also, FIG. 6 is a diagram for explaining directivity of emission light from a backlight module 205 of a liquid-crystal display 210 of FIG. 7.

The liquid crystal display 210 shown in FIG. 7 includes a backlight module 205 including a light source 201 and an optical material 202 and a liquid-crystal display panel 206 arranged opposing to the backlight module 205.

Moreover, as shown in FIG. 6, emission light from the luminous surface of the backlight module 205 has directivity with certain dispersion. The direction and the intensity of the emission light from the luminous surface of the backlight module 205 are schematically represented by optical energy 209 in a contour of a sector having a wide angular distribution. Additionally, the liquid crystal display 210 cannot change the directivity of the emission light.

In the liquid crystal display 210, since the emission light from the backlight module 205 has wide directivity, it is not possible in some cases to obtain sufficient visibility of the display panel 206 under a condition with strong daylight. For example, when a portable terminal with the module mounted therein is carried out into a bright environment such as an outside environment, there exists a fear of insufficient luminance of the display screen.

In contrast thereto, according to the liquid-crystal display 110 of the exemplary embodiment, by applying a voltage to the transmission diffusion changeover film 104, it is possible to remarkably improve luminance of the display screen to obtain visibility resistive against the daylight.

In addition, if it is desired to remarkably improve the luminance of the display screen, it is required in the conventional module shown in FIG. 7 to considerably increase power of the light source 201 or the number of the light sources 201. Furthermore, even if such countermeasure is taken, the luminance of the display screen is limited in association with the absolute maximum rating of the light source 201, and hence there exists a case in which the required luminance cannot be produced.

In contrast thereto, in the liquid crystal display 110 of the exemplary embodiment, since the emission light energy is efficiently concentrated onto a particular direction such as the front direction of the display screen to remarkably increase the front luminance, the luminance can be considerably improved without increasing the consumption power. Hence, in use thereof in an environment with strong daylight, it is possible, by concentrating luminance in a particular direction without increasing the backlight power, to change the luminance in the particular direction to the luminance resistive against the daylight. This makes it possible to employ a liquid-crystal display of transmission type in an outside environment.

Additionally, in the exemplary embodiment, when the directivity of the emission light from the liquid crystal display panel 106 is increased, the luminance in other than the front direction is remarkably reduced, and there is hence attained an effect to prevent from peeping.

As above, by using the transmissive liquid crystal display 110 of the exemplary embodiment, it is possible to attain a configuration which effectively suppresses the increase in consumption power of the high directivity backlight 103 in the portable terminal and which is excellent in the visibility in outside and inside environments and in the prevention from peeping.

In following exemplary embodiments, description different from the first exemplary embodiment will be given mainly.

(Second exemplary embodiment)

In the liquid crystal display described for the first exemplary embodiment, the high directivity backlight 103 may further include directivity enhancing means to increase directivity in the front direction of the emission light from the optical material 102. The directivity enhancing means may be a member in the form of, for example, a sheet. For the exemplary embodiment, description will be given of an example in which a louver film is adopted as directivity enhancing means of sheet type.

Fig. 8 is a cross-sectional view showing a configuration of a liquid-crystal display of the exemplary embodiment. The liquid crystal display shown in FIG. 8 is similar in the basic configuration to the liquid crystal display 110 of the first exemplary embodiment (FIG. 1) in which the high directivity backlight 103 includes the light source 101 and the light conducting plate (optical material 102) which guides emission light from the light source 101 to provide an area light source. Furthermore, in the exemplary embodiment, a louver film 111 to function as directivity enhancing means to increase directivity of the emission light from the optical material 102 is arranged on an opposing surface of the optical material 102 to oppose to the transmission diffusion changeover film 104. The louver film 111 is disposed between the optical material 102 and the transmission diffusion changeover film 104.

The louver film 111 is obtained, for example, by laminating a film made of a transparent material on front and rear surfaces of a black louver structure film to unify. The film in the louver structure includes a black material, for example, carbon black or the like. Also, as a film made of a transparent material, there is adopted, for example, a resin film having good workability such as a polycarbonate film or a polyethylene telephtalate film.

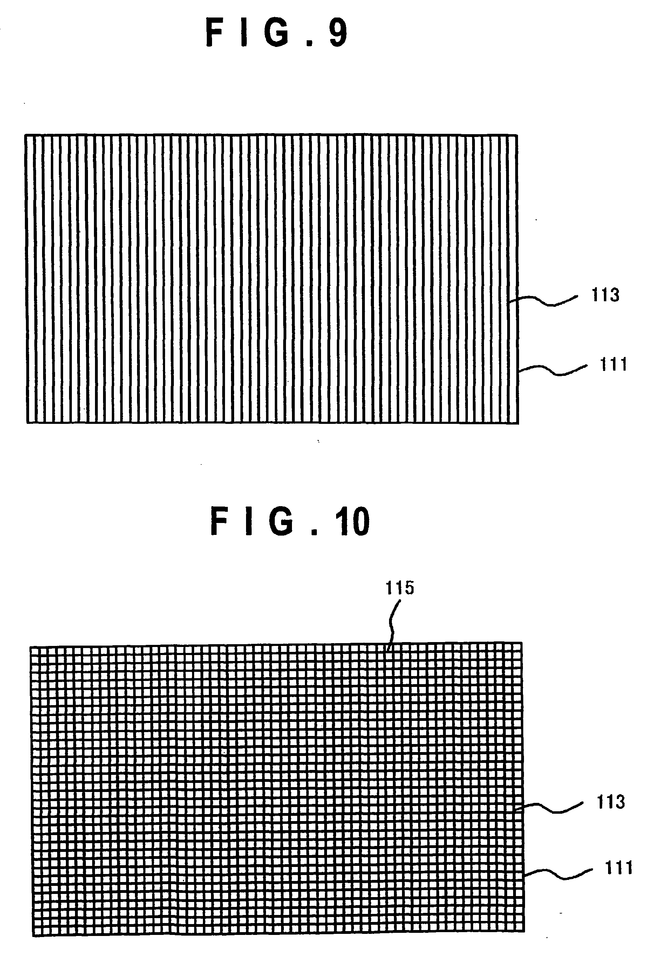

FIGS. 9 and 10 are plan views showing configuration examples of the louver film 111. The louver film 111 shown in FIG. 9 includes a first louver 113. The first louver 113 includes a plurality of stripe-shaped black films extending in parallel to each other along a short-side direction of the louver film 111. The black films comprising the first louver 113 are arranged on a surface of the louver film 111 in the contour of blinds vertical or with a predetermined angle to the surface of the louver film 111. When light passes through the louver film 111, directivity of the light in the front direction thereof is improved. By disposing such louver film 111 at a position on the light source side relative to the transmission diffusion changeover film 104, it is possible to further increase the front directivity of the incident light to the changeover film 104.

Furthermore, in FIG. 10, the louver film 111 includes, in addition to the first louver 113 including a plurality of films arranged in parallel with each other in a first direction, a second louver 115 including a plurality of films which extend in a direction perpendicular to the first louver 113 and which are arranged in parallel with each other. Black films comprising the second louver 115 are also arranged, like in the first louver 113, on a surface of the louver film 111 in the contour of blinds vertical or with a predetermined angle to the surface of the film 111. In FIG. 10, since the louver is arranged in a matrix shape, the directivity in the straight direction can be more enhanced.

The louver film 111 shown in FIG. 10 can be attained by laminating, for example, two louver films 111 shown in FIG. 9 onto each other. Additionally, although it is only necessary that the first and second louvers 113 and 115 are disposed not to be parallel to each other; however, as shown in FIG. 10, it is favorable to arrange the louvers to be vertical to each other. In this arrangement, it is possible to more effectively increase the directivity in the front direction of transmitted light of the louver film 111.

In this exemplary embodiment, since the louver film 111 is disposed between the optical material 102 and the changeover film 104, the front directivity of the incident light to the transmission diffusion changeover film 104 can be further increased. Hence, in the first state in which transmittivity of the transmission diffusion changeover film 104 is relatively high, it is possible to further enhance the front directivity of the emission light from the transmission diffusion changeover film 104. Therefore, it is possible to much more improve the directivity of the liquid crystal display panel 106 under a condition of strong daylight such as under the sunlight.

Furthermore, this effect is conspicuously obtained by use of the louver film 111 in which louvers are arranged in a matrix shape as shown in FIG. 10.

(Third exemplary embodiment)

The exemplary embodiment relates to a mobile phone including a liquid crystal display described in the exemplary embodiments described above. Incidentally, for the exemplary embodiment, description will be given of a case in which the above described liquid crystal display is disposed in a mobile phone; however, either one of the liquid-crystal displays of the exemplary embodiments described above may be arranged in other portable terminals.

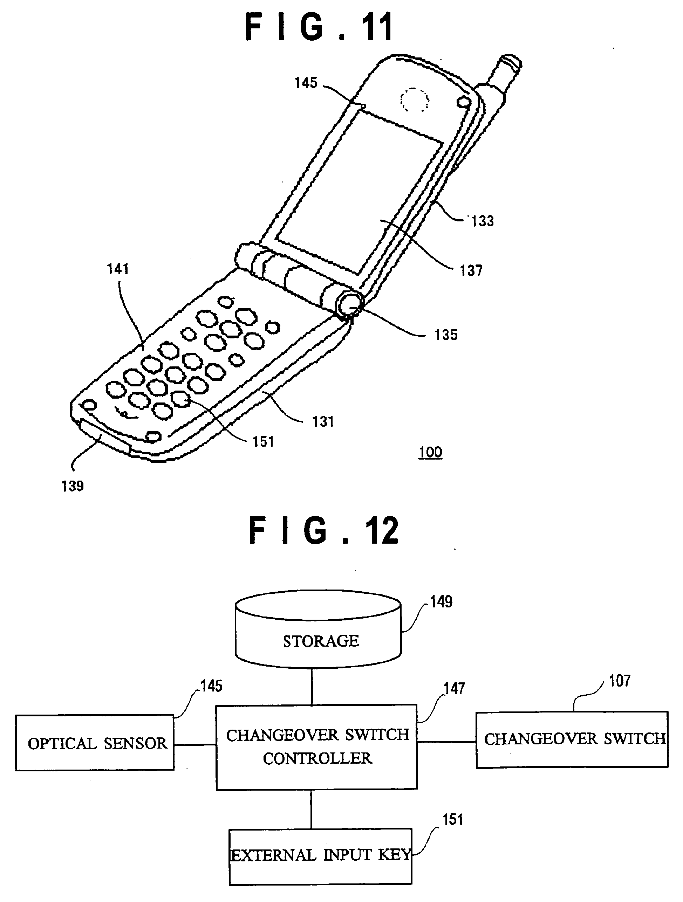

FIG. 11 is a perspective view showing an appearance of the mobile phone of the exemplary embodiment. A mobile phone 100 shown in FIG. 11 includes a cap section 133 including a display screen 137 and a body section 131 including a key arrangement section 141 in which a plurality of external input keys are arranged, the cap section 133 and the key arrangement section 141 being disposed to be foldable by a hinge section 135.

On the display screen 137, there is disposed the liquid crystal display panel 106 of one of the liquid-crystal displays described in the exemplary embodiments. The liquid crystal display panel 106 is arranged such that a rear surface of an opposing surface to the transmission diffusion changeover film 104 opposes to the display screen 137.

Additionally, in the cap section 133, one or a plurality of optical sensors 145 is or are disposed at a predetermined position(s) on the side on which the display screen 137 exists. Each optical sensor 145 is arranged, for example, in the vicinity of or in the display screen 137. By disposing the optical sensor 145 in or in the vicinity of the display screen 137, intensity of daylight on the display screen 137 can be detected more accurately. In FIG. 11, one optical sensor 145 is arranged in the vicinity of the display screen 137.

The optical sensor 145 detects a parameter reflecting the daylight intensity, for example, luminance or illuminance of the daylight and converts the parameter into an electric signal such as a voltage. As the optical sensor 145, there is adopted, for example, an optoelectric converter member, for example, a photodiode or the like.

FIG. 12 is a function block diagram showing a configuration of a periphery of a controller of a liquid-crystal display installed in the mobile phone 100. The mobile phone 100 includes, in addition to the optical sensor 145 and the changeover switch 107 of the liquid crystal display, a changeover switch controller 147, a storage 149, and an external input key 151.

The storage 149 stores a threshold value of each value detected by the optical sensor 145.

The changeover switch controller 147 controls a changeover between the transmission and diffusion states of the transmission diffusion changeover film 104. The changeover switch controller 147 conducts a changeover between the first and second states according to luminance or illuminance of the daylight in the vicinity of the liquid crystal display panel 106.

More specificcaly, the changeover switch controller 147 acquires an electric signal corresponding to the luminance or illuminance of the daylight detected by the optical sensor 145. The changeover switch controller 147 controls operation of the changeover switch 107 according to magnitude of the obtained electric signal to thereby control presence or absence of the applying of a voltage to the transmission diffusion changeover film 104. The changeover switch controller 147 refers to data of the threshold value stored in the storage 149. If the value detected by the optical sensor 145 is equal to or more than the threshold value, the changeover switch controller 147 sets the changeover switch 107 to an on state and apply a voltage to the transmission diffusion changeover film 104 to set the transmission diffusion changeover film 104 to the first state. Conversely, if the value detected by the optical sensor 145 is less than the threshold value, the controller 147 sets the changeover switch 107 to an off state and set the transmission diffusion changeover film 104 to the second state in which no voltage is applied to the transmission diffusion changeover film 104.

In addition, the changeover switch controller 147 conducts a changeover between the applying and the non-applying of a voltage to the transmission diffusion changeover film 104 in response to a key operation for the external input key 151. For example, a function to change the front luminance is beforehand assigned to a predetermined external input key 151. Thereafter, when a user of the mobile phone 100 operates the pertinent key, the changeover switch controller 147 conducts a changeover between the applying and the non-applying of a voltage to the transmission diffusion changeover film 104.

Furthermore, the mobile phone 100 includes an external connection terminal section 139. This makes it possible that the mobile phone 100 communicates a signal via the external connection terminal section 139 with an external device (not shown). In this regard, it is not necessarily required that the mobile phone 100 includes the external connection terminal section 139.

In the mobile phone 100, the changeover switch controller 147 controls operation of the changeover switch 107 according to a signal from the optical sensor 145. Therefore, according to intensity of the daylight, it is possible to securely change the front luminance of the incident light to the liquid-crystal display panel 106.

Although FIG. 11 shows an example of a configuration in which one optical sensor 145 is arranged in the vicinity of the display screen 137, a plurality of optical sensors 145 may be disposed apart from each other in the vicinity of the display screen 137. This makes it possible to correct the intensity of light on the basis of the intensity of light detected by the plural optical sensors. Also, in this situation, according to values detected by the plural optical sensors 145, the changeover switch controller 147 may control operation of the changeover switch 107. As a result, it is possible that the intensity of daylight in the vicinity of the display screen 137 can be more correctly acquired and the front luminance of the incident light to the display screen 137 can be securely changed on the basis of the intensity of daylight.

Furthermore, the mobile phone 100 may further include a camera section. The camera section includes a lens and a CCD sensor. The camera section is constructed being disposed at a predetermined position of the mobile phone 100 to be capable of shooting a video image displayed on the display screen 137.

Moreover, although the exemplary embodiment exemplifies a foldable mobile phone, the liquid-crystal displays of the exemplary embodiments described above are applicable to mobile phones other than the foldable ones.

Also, the exemplary embodiment has been described by use of an example in which a portable terminal is a mobile phone; however, the portable terminal may be a terminal communicable with another terminal at a remote place via a network, for example, a wireless LAN or the Internet.

Additionally, the mobile phone 100 may include a dedicated switch capable of directly conducting a changeover of the transmission diffusion changeover film 104 in response to an external input. Furthermore, it is also possible that the changeover is conducted in sharing with another switch assigned to a long depression of an external input key 151. As a result, the number of switches may also be reduced. In addition, by assigning the changeover operation to software, it is possible that the changeover is conducted by selecting an item in the display screen.

As above, description has been given of exemplary embodiments of the present invention by referring to the drawings; however, these are examples of the present invention and hence various configurations other than those above may also be adopted.

For example, in the first and second exemplary embodiments, description has been given of the backlight module 105 in which the high directivity backlight 103 is combined with the transmission diffusion changeover film 104. For other configurations of the backlight module, it is also possible to employ a backlight with wide directivity in place of the high directivity backlight 103 as well as a transmission collection changeover material in place of the transmission diffusion changeover film 104. Also in this combination, there is obtained an effect similar to those of the exemplary embodiments above.

BRIEF DESCRIPTION OF DRAWINGS

[FIG. 1] is a cross-sectional view showing structure of a liquid crystal display of a portable terminal in an exemplary embodiment.
[FIG. 2] is a diagram to explain directivity of emission light from the backlight module of the liquid crystal display of FIG. 1.
[FIG. 3] is a diagram to explain directivity of emission light from the backlight module of the liquid crystal display of FIG. 1.
[FIG. 4] is a cross-sectional view showing structure of the liquid crystal display of the portable terminal in the exemplary embodiment.
[FIG. 5] is a cross-sectional view showing structure of a liquid crystal display of the portable terminal in the exemplary embodiment.
[FIG. 6] is a diagram to explain directivity of the emission light from the backlight module of the liquid crystal display of FIG. 7.

[FIG. 7] is a cross-sectional view showing structure of a conventional liquid crystal display.

[FIG. 8] is a cross-sectional view showing structure of the liquid crystal display of the portable terminal in the exemplary embodiment.

[FIG. 9] is a plan view showing a configuration of a louver film of the liquid-crystal display of FIG. 8.

[FIG. 10] is a plan view showing a configuration of the louver film of the liquid-crystal display of FIG. 8.

[FIG. 11] is a perspective view showing structure of a portable terminal in an exemplary embodiment.

[FIG. 12] is a block diagram showing structure of the portable terminal in the exemplary embodiment.

DESCRIPTION OF REFERENCE NUMERALS

| | |
|---|---|
| 100 | Mobile phone |
| 101 | Light source |
| 102 | Optical material |
| 103 | High directivity backlight |
| 104 | Transmission diffusion changeover film |
| 105 | Backlight module |
| 106 | Liquid crystal display panel |
| 107 | Changeover switch |
| 109 | Optical energy |
| 110 | Liquid-crystal display |
| 111 | Louver film |
| 113 | First louver |
| 115 | Second louver |
| 131 | Body section |
| 133 | Cap section |
| 135 | Hinge section |
| 137 | Display screen |
| 139 | External connection terminal section |
| 141 | Key arrangement section |
| 145 | Optical sensor |
| 147 | Changeover switch controller |
| 149 | Storage |
| 151 | External input key |

**Claims**

1. A portable terminal, comprising:

a transmissive liquid crystal display panel;
an area light source disposed opposing to the liquid crystal display panel; and
a transmission diffusion changeover film for conducting a changeover between transmission and diffusion states of light emitted from the area light source, wherein
the transmission diffusion changeover film is arranged between the liquid-crystal display panel and the area light source and is configured to be capable of conducting a changeover between a first state wherein straight light transmittivity of emission light from the areal light source is relatively high and a second state wherein the straight light transmittivity of emission light from the areal light source is relatively low.

2. The portable terminal in accordance with claim 1, wherein
the emission light from the area light source includes a viewing angle equal to or less than 40° in the full width.

3. The portable terminal in accordance with claim 1 or 2, wherein
a difference between the viewing angle of the emission light from the transmission diffusion changeover film in the second state and that of the emission light from the changeover film in the first state is equal to or more than 10° in the full width.

**4.** The portable terminal in accordance with claim 1 or 2, wherein
front luminance of the emission light from the transmission diffusion changeover film in the first state is equal to or more than twice that of the emission light from the transmission diffusion changeover film in the second state.

**5.** The portable terminal in accordance with one of claims 1 to 4, wherein:

the transmission diffusion changeover film includes a material capable of conducting a changeover between the transmission and diffusion states of light; and
the changeover between the first and second states is carried out on the basis of presence or absence of applying a voltage to the transmission diffusion changeover film.

**6.** The portable terminal in accordance with claim 5, wherein
a voltage is applied to the transmission diffusion changeover film in the first state and no voltage is applied to the transmission diffusion changeover film in the second state.

**7.** The portable terminal in accordance with claim 5 or 6, wherein:

the viewing angle of the emission light from the transmission diffusion changeover film is substantially equal to that of the emission light from the area light source in the first state; and
the transmission diffusion changeover film more reduces the directivity of the emission light from the area light source in the second state than in the first state.

**8.** The portable terminal in accordance with one of claims 1 to 7, wherein
the area light source comprises:

a light source;
a light conducting plate for conducting emission light from the light source and producing an area light source; and
directivity enhancing means disposed between the light conducting plate and the transmission diffusion changeover film for increasing the directivity of the emission light from the light conducting plate.

**9.** The portable terminal in accordance with claim 8, wherein the directivity enhancing means is a louver film.

**10.** The portable terminal in accordance with claim 9, wherein
the louver film comprises:

a first louver comprising a plurality of films arranged in parallel to each other in a first direction; and
a second louver comprising a plurality of films arranged in parallel to each other and extending in a direction perpendicular to the first louver.

**11.** The portable terminal in accordance with one of claims 1 to 10, further comprising
an optical sensor for detecting luminance or illuminance of daylight.

**12.** The portable terminal in accordance with claim 11, comprising
a controller for controlling the transmission and diffusion states of the transmission diffusion changeover film, wherein
the controller conducts a changeover between the first and second states according to the luminance or illuminance of daylight in the vicinity of the liquid crystal display panel detected by the optical sensor.

**13.** The portable terminal in accordance with claim 12, wherein:

the controller sets the transmission diffusion changeover film to the first state if the luminance or illuminance of daylight is equal to or more than a threshold value; and
the controller sets the transmission diffusion changeover film to the second state if the luminance or illuminance of daylight is less than a threshold value.

# FIG.1

106

101　　　　　　102

103

104

105

110

# FIG.2

109

105

# F I G . 3

# F I G . 4

# FIG.5

# FIG.6

# F I G . 7

206

201 202

205

210

# F I G . 8

106

111

101 102

103 104

105

# FIG.9

113

111

# FIG.10

115

113

111

# FIG. 11

# FIG. 12

| **INTERNATIONAL SEARCH REPORT** | International application No. |
|---|---|
| | PCT/JP2007/050127 |

A. CLASSIFICATION OF SUBJECT MATTER
*G02F1/1347*(2006.01)i, *G02F1/1334*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02F1/1347, G02F1/1334, G02F1/1335

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | US 5831698 A (International Business Machines Corp.),<br>03 November, 1998 (03.11.98),<br>Full text; all drawings<br>(Family: none) | 1-2<br>9-13 |
| X<br>Y | JP 9-197405 A (Sharp Corp.),<br>31 July, 1997 (31.07.97),<br>Fig. 4<br>& US 5877829 A | 1-2<br>9-13 |
| Y | JP 62-56930 A (Seiko Epson Corp.),<br>12 March, 1987 (12.03.87),<br>Page 2, lower left column, lines 2 to 9;<br>Fig. 1(c)<br>(Family: none) | 9-10 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 March, 2007 (27.03.07) | 17 April, 2007 (17.04.07) |

| Name and mailing address of the ISA/<br>Japanese Patent Office | Authorized officer |
|---|---|
| Facsimile No. | Telephone No. |

Form PCT/ISA/210 (second sheet) (April 2005)

**INTERNATIONAL SEARCH REPORT**

International application No.

PCT/JP2007/050127

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 62-153824 A  (Nippon Seiki Co., Ltd.),<br>08 July, 1987 (08.07.87),<br>Page 2, lower left column, line 14 to page 3,<br>upper left column, line 11; Figs. 1 to 4<br>(Family: none) | 11-13 |

Form PCT/ISA/210 (continuation of second sheet) (April 2005)

## INTERNATIONAL SEARCH REPORT

| International application No. |
|---|
| PCT/JP2007/050127 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
Document 1: US 5,831,698 A and Document 2: JP 9-197405 A disclose a mobile terminal including a transmitting type liquid crystal display panel, a planar light source arranged to oppose to the liquid crystal display panel, and a transmission diffusion switching film for switching the transmission diffusion state of the light emitted from the planar light source,

(Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

| INTERNATIONAL SEARCH REPORT | International application No. |
| --- | --- |
| | PCT/JP2007/050127 |

Continuation of Box No.III of continuation of first sheet(2)

wherein the transmission diffusion switching film is arranged between the liquid crystal display panel and the planar light source and is configured so that switching can be performed between a first state at which the rectilinear light transmission ratio of the light emitted from the planar light source is relatively high and a second state at which the rectilinear light transmission ratio of the light emitted from the planar light source is relatively low. Accordingly, the invention of claim 1 is not novel for there exist documents 1-2.

As a result the technical feature common to the inventions of claims 1-13 makes no contribution over the prior art. Consequently, no special technical feature within the meaning of PCT Rule 13.2, exists between the inventions of claims [1-2] and the inventions of claims [3], [4], [5-7], [8-10], [11-13].

Therefore, no technical relationship within the meaning of PCT Rule 13 between the inventions of claims [1-2] and claims [3], [4], [5-7], [8-10], [11-13] can be seen. Thus, this international application does not satisfy the requirement of unity of invention.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H876104 B

- JP H1184357 B